# EUROPEAN PATENT APPLICATION

(11) **EP 4 134 721 A1**
(43) Date of publication of application: **15.02.2023**
(21) Application number: 21785002.3
(22) Date of filing: 02.04.2021
(51) Int. Cl.: G02B 7/02, G03B 15/00

(54) **IMAGING DEVICE**

(30) Priority: 10.04.2020 JP 2020071278
(71) Applicant: Kyocera Corporation, Kyoto-shi Kyoto 612-8501 (JP)
(72) Inventor: UNO Yoshinori, Kyoto-shi, Kyoto 612-8501 (JP)
(74) Representative: Viering, Jentschura & Partner mbB Patent- und Rechtsanwälte
(86) International application number: PCT/JP2021/014390
(87) International publication number: WO 2021/206027

(57) **Abstract**

An imaging device is provided. The imaging device has an optical performance with less degradation due to an environmental change, such as changes in temperature and humidity. An imaging device (10) includes a first lens barrel (21), an imaging element (31), and a frame (30). The first lens barrel (21) holds a first lens (201) of an imaging optical system (20). The imaging element (31) is disposed on an image side of the imaging optical system (20). The frame (30) is attached to a substrate (32). The imaging element (31) is mounted on the substrate (32). The frame (30) is attached to the first lens barrel (21) at a position on an object side of the first lens (201).

## Description

### CROSS-REFERENCE TO RELATED APPLICATIONS

The present application claims priority from Japanese Patent Application No. 2020-071278 (filed on April 10, 2020), the entire contents of which are incorporated herein by reference.

### TECHNICAL FIELD

The present disclosure relates to an imaging device.

### BACKGROUND OF INVENTION

In recent years, smaller imaging devices with a greater number of pixels have been desired. A reduction in pixel pitch has led to a reduction in allowable assembly errors, for example, between lenses and between an imaging element and an objective lens.

For example, Patent Literature 1 discloses an imaging device including two units, each unit including lenses and a holding frame (lens barrel). When the units are assembled together, one unit can be moved with respect to the other along an optical axis to focus an objective lens on an imaging element and then the units can be fixed together with a thermosetting resin.

### CITATION LIST

### PATENT LITERATURE

Patent Literature 1: International Publication No. 2015/064614

### SUMMARY

In an embodiment of the present disclosure, an imaging device includes a first lens barrel, an imaging element, and a frame. The first lens barrel holds a first lens of an imaging optical system. The imaging element is disposed on an image side of the imaging optical system. The frame is attached to a substrate. The imaging element is mounted on the substrate. The frame is attached to the first lens barrel at a position on an object side of the first lens.

### BRIEF DESCRIPTION OF THE DRAWINGS

FIG. 1 is an exploded view illustrating main elements of an imaging device according to an embodiment of the present disclosure.
FIG. 2 is an external view of the imaging device according to the embodiment of the present disclosure.
FIG. 3 is a sectional view illustrating the main elements of the imaging device according to the embodiment of the present disclosure.
FIG. 4 is a flowchart of a method for manufacturing the imaging device according to the embodiment of the present disclosure.
FIG. 5 illustrates an example in which a vehicle includes the imaging device according to the embodiment of the present disclosure.
FIG. 6 is a sectional view of an imaging device according to a comparative example.

### DESCRIPTION OF EMBODIMENTS

### (Configuration of Imaging Device)

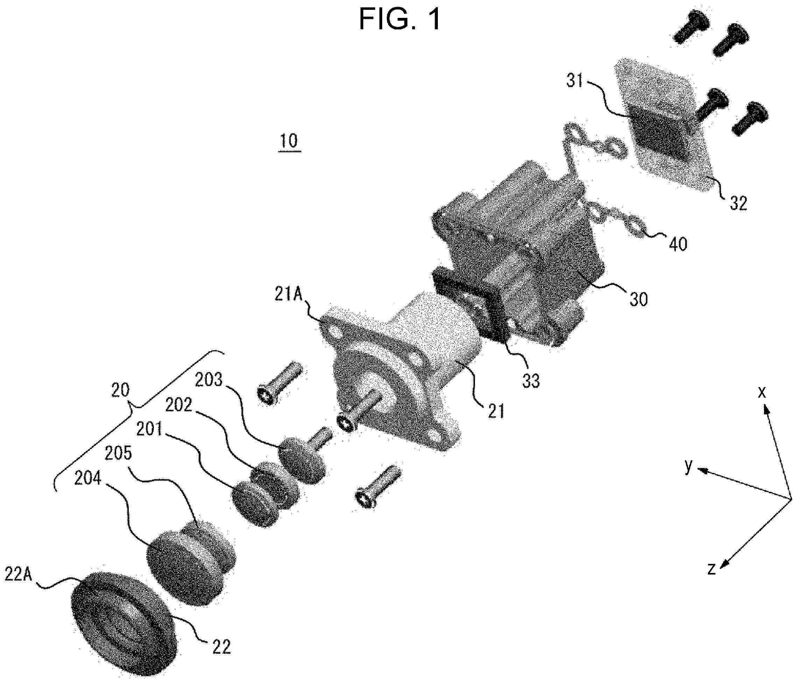

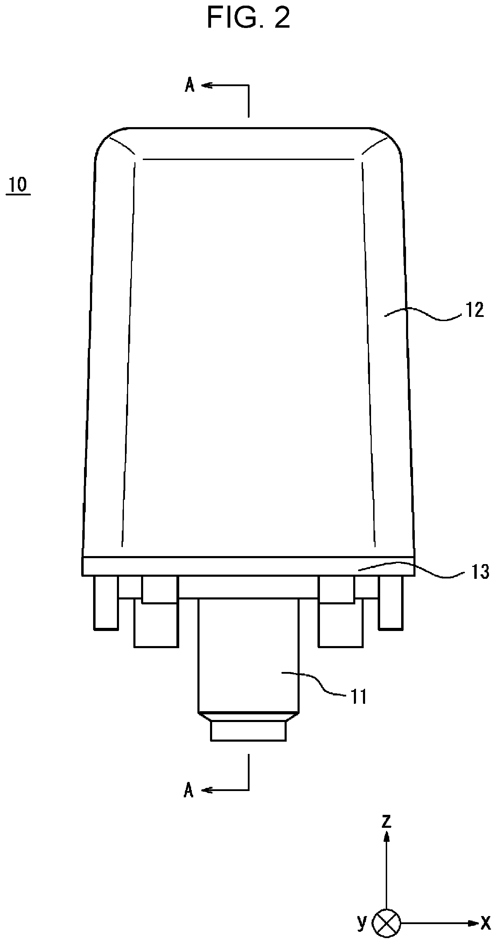

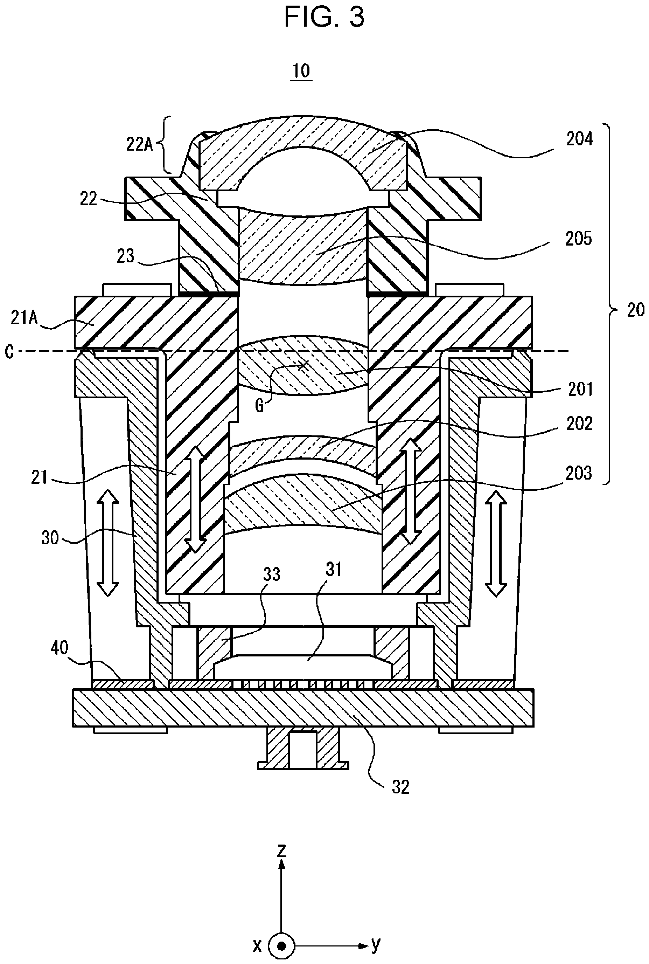

FIG. 1 is an exploded view illustrating main elements of an imaging device 10 according to an embodiment of the present disclosure. FIG. 2 is an external view of the imaging device 10 according to the present embodiment. FIG. 3 is a sectional view illustrating the main elements of the imaging device 10 according to the present embodiment. FIG. 3 is a sectional view illustrating the main elements contained in, for example, a housing of the imaging device 10 taken along line A-A in FIG. 2. As illustrated in FIGs. 1 to 3, an orthogonal coordinate system is defined to correspond to the orientation of the imaging device 10. A z-axis direction is a direction parallel to an optical axis of the imaging device 10. The imaging device 10 captures an image of a subject. The subject is an object located in a positive z-axis direction from the imaging device 10. The positive z-axis direction may be referred to as a direction toward an object side or front. A negative z-axis direction may be referred to as a direction toward an image side or rear. A y-axis direction corresponds to a width direction of the imaging device 10. An x-axis direction corresponds to a height direction of the imaging device 10. In the following description, positional relationships may be described using axes or planes of the orthogonal coordinate system.

As illustrated in FIG. 1, the imaging device 10 includes a second lens barrel 22, an imaging optical system 20, a first lens barrel 21, an imaging element cover 33, a frame 30, a spacer 40, an imaging element 31, and a substrate 32. As illustrated in FIG. 2, the imaging device 10 also includes a front housing 12, a rear housing 13, and a wiring unit 11. As illustrated in FIG. 3, the imaging device 10 also includes a joining member 23. Thus, the imaging device 10 includes a structure in which the front housing 12 and the rear housing 13 illustrated in FIG. 2 cover the elements illustrated in FIGs. 1 and 3. Components of the imaging device 10 are described in detail below. Note that FIGs. 1 to 3 are illustrative. The imaging device 10 does not necessarily include all of the components illustrated in FIGs. 1 to 3. The imaging device 10 may include one or more components other than the components illustrated in FIGs. 1 to 3.

The front housing 12 is positioned at the front of the imaging device 10 and protects components contained in the front housing 12 from, for example, an impact. The front housing 12 includes an opening that does not block light that travels toward the imaging optical system 20. The opening in the front housing 12 exposes portions of the imaging optical system 20 and the second lens barrel 22. The front housing 12 may be connected to the second lens barrel 22 through, for example, the fit between a projection 22A of the second lens barrel 22 and the opening in the front housing 12. As another example, the front housing 12 and the second lens barrel 22 may be connected to each other by another method, for example, by an adhesive or welding. The front housing 12 also has a function of pressing the imaging optical system 20 rearward so that the imaging optical system 20 does not fall through the opening.

The material of the front housing 12 may be, but is not limited to, a resin. Examples of the resin usable as the material of the front housing 12 include polyphenylene sulfide (PPS), polyetherimide (PEI), polyether ether ketone (PEEK), polycarbonate (PC), cycloolefin polymer (COP), ABS resin, polyethylene terephthalate (PET), and polystyrene (PS). However, the material is not limited to the examples mentioned above.

The rear housing 13 is positioned at the rear of the imaging device 10 and protects components contained in the rear housing 13 from, for example, an impact. The position of the rear housing 13 may be fixed with respect to the front housing 12 while the elements illustrated in FIGs. 1 and 3 are disposed between the rear housing 13 and the front housing 12. The rear housing 13 and the front housing 12 may be connected to each other by, for example, an adhesive or by another method, such as welding, fitting, or screwing. The material of the rear housing 13 may be, but is not limited to, a resin. Examples of the resin usable as the material of the rear housing 13 include, but are not limited to, the resins mentioned in the description of the front housing 12.

The wiring unit 11 includes wires including a line for supplying electric power to the imaging device 10 and a signal line for outputting an image signal from the imaging element 31. The wires of the wiring unit 11 may extend to the outside of the imaging device 10 through an opening in the rear housing 13 and be connected to an electronic device disposed outside the imaging device 10.

The imaging optical system 20 includes at least one optical member and is designed to have desired optical characteristics, such as a focal length and a focal depth. In the present embodiment, the imaging optical system 20 includes a first lens 201, a lens 202, a lens 203, a second lens 204, and a lens 205 as optical members. The imaging optical system 20 may also include a diaphragm and an optical filter. The first lens 201, the lens 202, the lens 203, the second lens 204, and the lens 205 may be, for example, plastic lenses, but one or more thereof may be a glass lens or lenses. The number of lenses included in the imaging optical system 20 may be one or more and not more than four, or six or more.

The first lens barrel 21 holds one or more of the lenses included in the imaging optical system 20. The first lens barrel 21 is disposed on the image side of the second lens barrel 22, that is, behind the second lens barrel 22. In the present embodiment, the first lens barrel 21 holds the first lens 201. The first lens barrel 21 also holds the lens 202 and the lens 203. In the present embodiment, of the lenses held by the first lens barrel 21, the first lens 201 is positioned closest to the object side, that is, closest to the front end. The first lens 201, the lens 202, and the lens 203 may converge light that passes through the first lens 201, the lens 202, and the lens 203. A lens group held by the first lens barrel 21 is to be attached with a higher positional accuracy than a lens group held by the second lens barrel 22 described below. In other words, when the lens group held by the first lens barrel 21 moves in an optical axis direction, the imaging position changes by a greater amount than when the lens group held by the second lens barrel 22 moves in the optical axis direction.

The first lens barrel 21 includes a tubular portion and a flange portion 21A. The tubular portion surrounds an optical axis of the imaging optical system 20. The flange portion 21A projects in directions crossing the optical axis of the imaging optical system 20. The flange portion 21A may project in directions along a plane (xy plane) orthogonal to the optical axis of the imaging optical system 20, or in directions along a plane inclined with respect to the xy plane toward the z axis. The flange portion 21A is positioned at an end portion of the first lens barrel 21 at the object side. As described in detail below, the frame 30 is attached to the flange portion 21A. The flange portion 21A may include screw holes through which the flange portion 21A can be screwed to the frame 30. The first lens barrel 21 and the frame 30 may be connected to each other by another method, such as welding or fitting, instead of screwing.

The material of the first lens barrel 21 may be, but is not limited to, a resin. Examples of the resin usable as the material of the first lens barrel 21 include, but are not limited to, the resins mentioned in the description of the front housing 12. The resin used as the material of the first lens barrel 21 preferably has a low hygroscopicity. In another example, the material of the first lens barrel 21 may be a metal, such as an aluminum alloy, a magnesium alloy, or a zinc alloy.

The second lens barrel 22 holds one or more of the lenses included in the imaging optical system 20. The second lens barrel 22 is disposed on the object side of the first lens barrel 21, that is, in front of the first lens barrel 21. In the present embodiment, the second lens barrel 22 holds the second lens 204. The second lens barrel 22 also holds the lens 205. In the present embodiment, of the lenses held by the second lens barrel 22, the second lens 204 is positioned closest to the object side, that is, closest to the front end. The second lens barrel 22 has a tubular shape that surrounds the optical axis of the imaging optical system 20. An end portion of the second lens barrel 22 at the object side is a projection 22A projecting in the positive z-axis direction, and is connectable to the front housing 12 as described above. The second lens 204 and the lens 205 may diffuse light that passes through the second lens 204 and the lens 205.

The material of the second lens barrel 22 may be, but is not limited to, a resin. Examples of the resin usable as the material of the second lens barrel 22 include, but are not limited to, the resins mentioned in the description of the front housing 12. The resin used as the material of the second lens barrel 22 preferably has a low hygroscopicity. In another example, the material of the second lens barrel 22 may be a metal, such as an aluminum alloy, a magnesium alloy, or a zinc alloy.

The joining member 23 joins the first lens barrel 21 and the second lens barrel 22 together. The joining member 23 adjusts the position of the second lens barrel 22 with respect to the first lens barrel 21 in six-axis directions so that the imaging element 31 can receive an image focused by the imaging optical system 20. The adjustment in the six-axis directions means an adjustment in the x-axis direction, the y-axis direction, and the z-axis direction illustrated in FIGs. 1 to 3 and rotation directions around these axes (pan, tilt, and roll). The joining member 23 joins an object-side end portion of the first lens barrel 21 to an image-side end portion of the second lens barrel 22. The joining member 23 may be an adhesive capable of providing a predetermined interval between the first lens barrel 21 and the second lens barrel 22. In other words, the second lens barrel 22 may be attached to the first lens barrel 21 with the adhesive. As described below, the predetermined interval is a small value less than a thickness adjustable by the spacer 40. When the joining member 23 is an adhesive, the adhesive is preferably cured with ultraviolet light so that no optical displacement occurs due to contraction when the adhesive is cured. However, the adhesive is not limited to this, and may be a thermosetting adhesive. As another example, when the first lens barrel 21 and the second lens barrel 22 are each made of a metal, the joining member 23 may be a solder. As another example, the first lens barrel 21 and the second lens barrel 22 may be screwed to each other, and the joining member 23 may be a screw or a screw with a spring.

The frame 30 is attached to the first lens barrel 21 and the substrate 32 on which the imaging element 31 is mounted. The frame 30 includes an interior space that contains at least a portion of the first lens barrel 21. As illustrated in FIG. 1, an object-side end portion of the frame 30 is screwed to the flange portion 21A of the first lens barrel 21. The first lens 201 may have various shapes depending on the design of the imaging optical system 20. Therefore, in the following description, positional relationships are described with reference to a center of gravity G of the first lens 201. As illustrated in FIG. 3, an attachment position C at which the frame 30 and the flange portion 21A are joined together is on the object side of the center of gravity G of the first lens 201. In other words, the frame 30 is attached to the first lens barrel 21 at a position on the object side of the first lens 201. Such a structure facilitates calculation of influence of an environmental change on the imaging device 10 and allows for easier optical design. That is, a change in the shape of the first lens barrel 21, a resulting change in performances of the lenses held by the first lens barrel 21, and a change in the shape of the frame 30 can be calculated using the attachment position C as a common reference position. In response to an environmental change, such as changes in temperature and humidity, the first lens barrel 21 and the frame 30 each expand or contract with reference to the attachment position C, and therefore the lenses held by the first lens barrel 21 may be easily maintained focused on the imaging element 31. A predetermined interval, that is, a gap, is provided between the frame 30 and a portion of the first lens barrel 21 excluding the flange portion 21A. Even when the shape of the first lens barrel 21 changes due to a change in an operating environment, the optical performance is maintained as long as the change in shape occurs within the gap. In other words, when the shape of the first lens barrel 21 changes beyond the gap, a portion of the first lens barrel 21 other than the flange portion 21A comes into contact with the frame 30, and the optical performance may be degraded.

The frame 30 is attached to the substrate 32 with the spacer 40 disposed between the frame 30 and the substrate 32. As illustrated in FIG. 1, the frame 30 may be screwed to the substrate 32 with the imaging element cover 33 and the spacer 40 disposed between the frame 30 and the substrate 32.

The material of the frame 30 may be, but is not limited to, a metal. Examples of the metal used as the material of the frame 30 include an aluminum alloy, such as ADC12, a magnesium alloy, and a zinc alloy. The frame 30 may be a die casting to ensure high dimensional accuracy.

The imaging element cover 33 includes an opening that does not block a subject image that travels from the imaging optical system 20 to a light-receiving surface of the imaging element 31. Due to the imaging element cover 33, ambient light other than the subject image is not incident on the light-receiving surface of the imaging element 31. The material of the imaging element cover 33 may be, but is not limited to, a resin.

The spacer 40 is positioned between the frame 30 and the substrate 32, and serves to adjust the interval between the frame 30 and the substrate 32 in one-axis direction (z-axis direction). One or more spacers 40 are inserted between the frame 30 and the substrate 32. The interval between the frame 30 and the substrate 32 in the z-axis direction is adjusted by the thickness or number of the one or more spacers 40. In other words, the one or more spacers 40 may serve to adjust the interval between the frame 30 and the substrate 32 in the z-axis direction to position the imaging element 31 so that the imaging element 31 can receive the image focused by the imaging optical system 20. The interval in the z-axis direction may be adjusted by the change in the number of the one or more spacers 40 that are inserted. In one example, the thickness of each spacer 40 in the z direction may be 50 µm. In this case, the interval in the z-axis direction may be adjusted in steps of 50 µm. The thickness of each spacer 40 in the z direction is preferably as small as possible, and is preferably not more than 100 µm, for example. More preferably, the thickness of each spacer 40 in the z direction is not more than 50 µm. Still more preferably, the thickness of each spacer 40 in the z direction is not more than 20 µm. Two or more spacers 40 with different thicknesses in the z direction may be used. The thickness of each spacer 40 may be set by various processes, such as polishing or etching.

The material of the one or more spacers 40 may be, but is not limited to, a metal. The material of the one or more spacers 40 preferably has a low coefficient of linear expansion. The metal used as the material of the one or more spacers 40 may be, for example, a stainless steel having a coefficient of linear expansion of not more than 16. As another example, the material of the one or more spacers 40 may be a ceramic. The one or more spacers 40 may be made of a resin as long as the resin has a low coefficient of linear expansion.

The imaging element 31 is disposed on the image side of the imaging optical system 20. The imaging element 31 is capable of receiving the subject image focused by the imaging optical system 20. The imaging element 31 captures the subject image focused on the light-receiving surface, converts the subject image into an image signal, and outputs the image signal. The imaging element 31 may be, for example, a charge coupled device (CCD) or a complementary metal oxide semiconductor (CMOS) image sensor.

The substrate 32 is a circuit board. Electronic components including at least the imaging element 31 are mounted on the substrate 32. The imaging element 31 is mounted on a front surface of the substrate 32. In other words, the imaging element 31 is mounted on the substrate 32 so that the light-receiving surface of the imaging element 31 is capable of receiving the subject image focused by the imaging optical system 20. The position of the substrate 32 is fixed with respect to the frame 30 while the imaging element cover 33 and the one or more spacers 40 are disposed between the substrate 32 and the frame 30. The substrate 32 may include screw holes having a diameter greater than the diameter of screws with which the substrate 32 can be screwed to the frame 30. When the substrate 32 is screwed to the frame 30, the position of the substrate 32 is adjusted in two-axis directions, which are the x-axis direction and the y-axis direction, and the subject image is focused on the light-receiving surface of the imaging element 31.

### (Manufacturing Method)

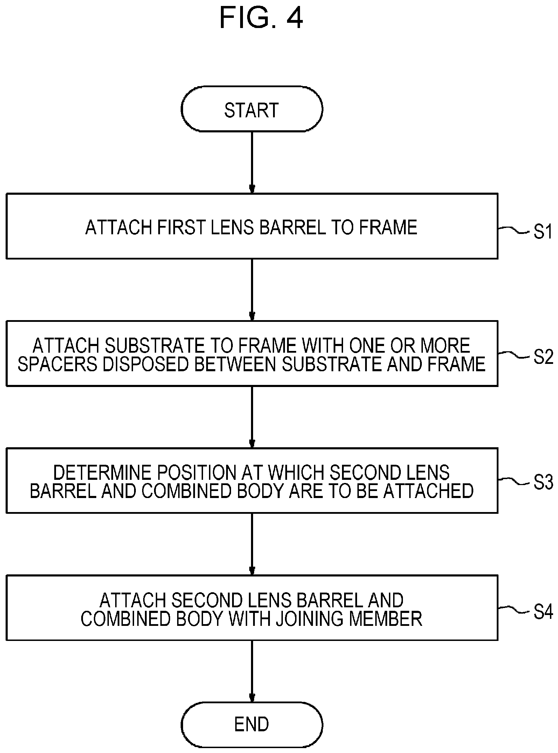

FIG. 4 illustrates an example of a method for manufacturing the imaging device 10 according to the embodiment of the present disclosure. The imaging device 10 including the above-described configuration may be manufactured in accordance with the flowchart of FIG. 4. First, the first lens barrel 21 is attached to the frame 30 (step S1). More specifically, the flange portion 21A of the first lens barrel 21 is screwed to the front of the frame 30.

After the first lens barrel 21 is attached to the frame 30, the substrate 32 is attached to the frame 30 with the one or more spacers 40 disposed between the substrate 32 and the frame 30 (step S2, substrate attaching step). More specifically, the substrate 32 on which the imaging element 31 is mounted is screwed to the rear of the frame 30 with the one or more spacers 40 disposed between the substrate 32 and the frame 30. In step S2, the position of the imaging element 31 on the substrate 32 with respect to the frame 30 in the z-axis direction may be adjusted by the thickness or number of the one or more spacers 40 that are inserted. In addition, in step S2, the position of the imaging element 31 with respect to the frame 30 in the x-axis and y-axis directions may be adjusted by the position at which the substrate 32 is screwed to the frame 30. The thickness in the z-axis direction or number of the one or more spacers 40 to be inserted may be determined in advance through measurement using a measurement device. For example, the focal position of the lenses on the first lens barrel 21 attached to the frame 30 may be measured with the measurement device to determine a target thickness of the one or more spacers 40 in the z-axis direction. Alternatively, the imaging optical system 20 may be measured while the second lens barrel 22 is temporarily placed on the frame 30 to which the first lens barrel is attached. The target thickness of the one or more spacers 40 in the z-axis direction is a thickness that enables the imaging optical system 20 to focus the subject image on the light-receiving surface of the imaging element 31 when the second lens barrel 22 is attached to the frame 30. The second lens barrel 22 is attached to the frame 30 with the joining member 23 having a predetermined thickness after the first lens barrel 21 and the substrate 32 are attached to the frame 30.

Then, an attachment position at which the second lens barrel 22 is to be attached to a combined body is determined (step S3). The combined body is composed of the frame 30 to which the first lens barrel is attached. More specifically, the combined body includes the frame 30 to which the first lens barrel 21 and the substrate 32 are attached. The attachment position is determined so that the light-receiving surface of the imaging element 31 can receive the subject image focused by the imaging optical system 20. The attachment position may be determined so that an optical axis of the second lens 204 and the lens 205 held by the second lens barrel 22 coincides with an optical axis of the first lens 201, the lens 202, and the lens 203 held by the first lens barrel 21.

Then, the second lens barrel 22 and the combined body are attached to each other with the joining member 23 (step S4). The joining member 23 attaches the second lens barrel 22 and the frame 30 to each other after an adjustment in the six-axis directions.

The joining member 23 provides a predetermined interval between the second lens barrel 22 and the first lens barrel 21 to adjust an interval that cannot be adjusted by the one or more spacers 40. As described above, each spacer 40 preferably has a thickness of not more than 100 µm. In this case, the joining member 23 may have a thickness of less than 100 µm that is not adjustable by the one or more spacers 40. For example, the joining member 23 may be a small amount of adhesive with a thickness of less than 100 µm. In general, the volume of an adhesive changes due to temperature increase and moisture absorption. However, when the joining member 23 is composed of a small amount of adhesive, the volume changes only by a small amount in response to temperature increase and moisture absorption. In this manufacturing method, the second lens barrel 22 and the combined body are attached to each other with the joining member 23 after the frame 30 and the substrate 32 are attached to each other with the one or more spacers 40 whose thickness or number is set. The positional relationship between the first lens barrel 21 and the imaging element 31 is determined based on the thickness or number of the one or more spacers 40. Therefore, the distance between the second lens barrel 22 and the position at which the frame 30 is attached is roughly determined. Accordingly, the joining member 23 may be composed of a predetermined small amount of adhesive. In this case, an assembly clearance is substantially constant.

### (Installation of Imaging Device in Vehicle)

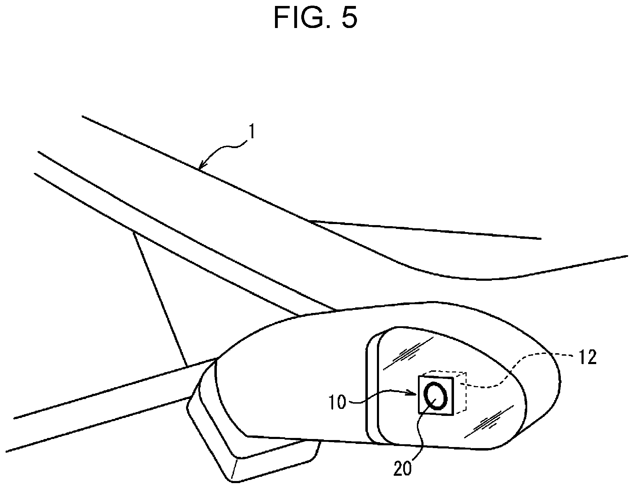

The imaging device 10 including the above-described configuration may be installed in a vehicle 1 as, for example, an onboard camera. The imaging device 10 may be fixed externally to the front of the vehicle 1 to record the behavior of a vehicle in front of the vehicle 1. The imaging device 10 may be fixed externally to the rear of the vehicle 1 to record the behavior of a vehicle behind the vehicle 1. In another example, as illustrated in FIG. 5, for example, the imaging device 10 may be disposed in a side mirror and constitute an electronic mirror. In such a case, the imaging device 10 may capture an image of an area behind the vehicle 1 and provide a driver with the image as driving assistance information. The image captured by the imaging device 10 may be displayed on a display device disposed in a cabin of the vehicle 1. The display device may be disposed on, for example, a rear-view mirror or an instrument panel so that the driver can see the display device while driving the vehicle 1.

### (Influence of Environmental Change)

The imaging device 10 installed in the vehicle 1 as an onboard camera is used in an environment with larger temperature and humidity variations compared to an indoor environment. Large changes in temperature and humidity may cause the components of the imaging device 10 to expand or contract. As described below, in the present embodiment, the imaging device 10 has an optical performance with less degradation due to a change in the operating environment. Therefore, the imaging device 10 is suitable for use as an onboard camera.

In the present embodiment, the imaging device 10 includes a nesting structure in which the first lens barrel 21 is disposed in the interior space of the frame 30 with a gap provided between the first lens barrel 21 and the frame 30 (see FIG. 3). As described above, even when the shape of the first lens barrel 21 changes due to a change in the operating environment, the optical performance is maintained as long as the change in shape occurs within the gap. Therefore, even when the shape of the first lens barrel 21 changes due to an environmental change, such as changes in temperature and humidity, the optical performance can be maintained unless the shape of the first lens barrel 21 changes beyond the gap.

Since the first lens barrel 21 and the frame 30 form a nesting structure, the shapes of the first lens barrel 21 and the frame 30 change in the same direction in response to an environmental change. For example, when the first lens barrel 21 expands in the z-axis direction due to a temperature increase, the frame 30 also expands in the z-axis direction (see FIG. 3). When the frame 30 expands in the z-axis direction, the position of the imaging element 31 mounted on the substrate 32 attached to the frame 30 moves in the negative z-axis direction. Therefore, the image focused on the light-receiving surface of the imaging element 31 is not easily displaced. Thus, even when the shapes of the first lens barrel 21 and the frame 30 change due to a temperature increase, the shapes change in the same direction. Therefore, the light-receiving surface of the imaging element 31 can receive the subject image focused by the imaging optical system 20.

The attachment position C at which the frame 30 and the flange portion 21A are joined together is on the object side of the center of gravity G of the first lens 201. Of the lenses included in the imaging optical system 20 and attached to the first lens barrel 21, the first lens 201 is positioned closest to the object side. More specifically, the attachment position C may be at end portions of the first lens barrel 21 and the frame 30 at the object side. Therefore, when the first lens barrel 21 and the frame 30 expand or contract in the z-axis direction due to a temperature change, the first lens barrel 21 and the frame 30 individually expand or contract in the same direction from the same reference point (attachment position C). Accordingly, the lenses of the imaging optical system 20 are maintained focused on the imaging element 31 despite the expansion or contraction of the first lens barrel 21. Thus, degradation in the optical performance due to an environmental change can be reduced.

The frame 30 may have a coefficient of linear expansion less than that of the first lens barrel 21. The frame 30 is attached to the first lens barrel 21 and the substrate 32 on which the imaging element 31 is mounted. Accordingly, a change in shape of the frame 30 affects the positions of the first lens barrel 21 and the imaging element 31, and is therefore preferably small. A change in shape (expansion) of the first lens barrel 21 is relatively greater than that of the frame 30. However, as described above, the first lens barrel 21 and the frame 30 are spaced from each other by a gap and do not come into contact with each other in an environment in which the imaging device 10 is normally used.

In the imaging device 10 according to the present embodiment, the frame 30 is attached to the substrate 32 with the one or more spacers 40 disposed between the frame 30 and the substrate 32. Therefore, the position of the imaging element 31 is adjusted by the thickness or number of the one or more spacers 40 so that the imaging element 31 can receive the image focused by the imaging optical system 20. Each spacer 40 is a member made of, for example, a metal or a ceramic having a thickness of, for example, not more than 100 µm. Thus, in the imaging device 10 according to the present embodiment, the position of the imaging element 31 can be finely adjusted by the one or more spacers 40. Since the material of the one or more spacers 40 is, for example, a metal or a ceramic, the coefficient of linear expansion of the material is less than that of a resin, and a change in volume caused by an environmental change, such as changes in temperature and humidity, can be reduced.

In the imaging device 10 according to the present embodiment, the second lens barrel 22 and the frame 30 (more specifically, the first lens barrel 21 attached to the frame 30) are joined together with the joining member 23. As described above, the joining member 23 has a small thickness that is less than the thickness of each spacer 40 and is composed of, for example, a small amount of adhesive. Therefore, the volume of the joining member 23 changes only by a small amount in response to temperature increase and moisture absorption.

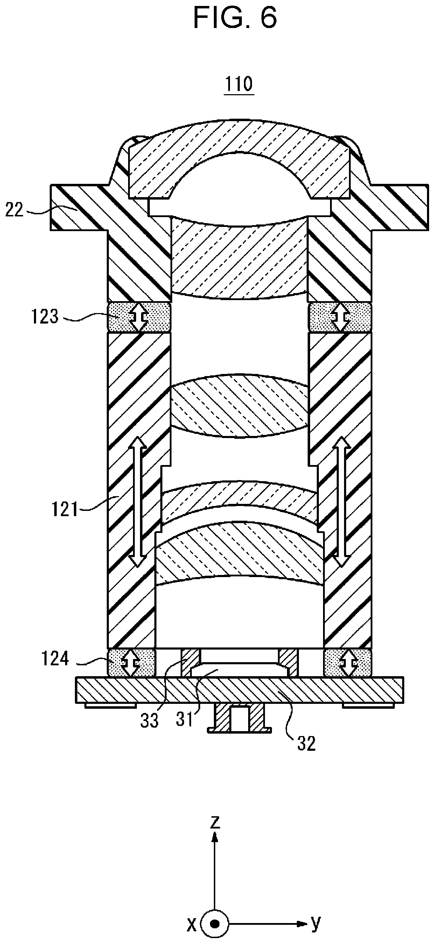

FIG. 6 is a sectional view of an imaging device 110 according to a comparative example including no frame 30. In the comparative example, the imaging device 110 includes a second lens barrel 22 and a substrate 32 on which an imaging element 31 is mounted. The second lens barrel 22, the substrate 32, and the imaging element 31 are the same as those included in the imaging device 10 according to the present embodiment. However, in the imaging device 110 according to the comparative example, the second lens barrel 22 and the substrate 32 are connected to a first lens barrel 121 including no flange with an adhesive portion 123 and an adhesive portion 124, respectively. The adhesive portion 123 and the adhesive portion 124 are adhesives.

In the imaging device 110 according to the comparative example, when the shape of the first lens barrel 121 changes due to an environmental change, such as changes in temperature and humidity, the change in shape of the first lens barrel 121 affects the positional relationship between the lens group on the first lens barrel 121, the second lens barrel 22, and the imaging element 31 along the optical axis. As illustrated in FIG. 6, when the first lens barrel 121 expands in the z-axis direction, the imaging optical system 20 is deformed, and the imaging element 31 moves away from an incident portion. In the imaging device 110 according to the comparative example, the position of the substrate 32 is adjusted not by the one or more spacers 40 but by the adhesive portion 124, which is an adhesive. Therefore, the adhesive portion 124 is deformed due to temperature increase and moisture absorption, and the deformation affects the reception of the image by the imaging element 31. In the comparative example, the imaging device 110 includes the adhesive portion 123, which is an adhesive, but includes no spacers 40. Therefore, the amount of adhesive cannot be reduced. Accordingly, the adhesive portion 123 is deformed due to the influence of temperature increase and moisture absorption, and the deformation affects an optical path of the imaging optical system 20. Thus, in the imaging device 110 according to the comparative example, the optical performance is inevitably degraded due to an environmental change, such as changes in temperature and humidity.

As is clear from a comparison with the comparative example, in the present embodiment, the imaging device 10 includes the above-described configuration and therefore has an optical performance with less degradation due to an environmental change, such as changes in temperature and humidity. The above-described manufacturing method enables manufacture of the imaging device 10 having an optical performance with less degradation.

Although the present disclosure has been described with reference to drawings and an embodiment, note that various changes and modifications are possible by those skilled in the art based on the present disclosure. Therefore, note that those changes and modifications are included in the scope of the present disclosure. For example, functions and the like included in each means or the like may be rearranged without any logical inconsistencies, and a plurality of means or the like may be combined together or divided.

For example, the imaging device 10 may include a processor that executes a process based on the image signal from the imaging element 31. The processor may output the processed image signal to the outside of the imaging device 10 through the wiring unit 11. The process performed by the processor based on the image signal may be, for example, an image process for adjusting brightness in accordance with external light, or an image process for displaying an image emphasizing a specified object included in the captured image. Examples of the specified object include a traffic sign and a white line on the road.

For example, the imaging device 10 may include a heat transfer member for dissipating heat generated by the imaging element 31. The heat transfer member may be disposed between the front housing 12 and the imaging element 31 or between the rear housing 13 and the imaging element 31. The heat transfer member is, for example, a flexible heat transfer sheet. The material of the heat transfer member may be, for example, silicone. However, the material is not limited to this, and may be another material that transfers heat.

### REFERENCE SIGNS

- 1: vehicle
- 10: imaging device
- 11: wiring unit
- 12: front housing
- 13: rear housing
- 20: imaging optical system
- 21: first lens barrel
- 21A: flange portion
- 22: second lens barrel
- 22A: projection
- 23: joining member
- 30: frame
- 31: imaging element
- 32: substrate
- 33: imaging element cover
- 40: spacer
- 110: imaging device
- 121: first lens barrel
- 123: adhesive portion
- 124: adhesive portion
- 201: first lens
- 202: lens
- 203: lens
- 204: second lens
- 205: lens

## Claims

1. An imaging device comprising:
a first lens barrel holding a first lens of an imaging optical system;
an imaging element disposed on an image side of the imaging optical system; and
a frame attached to a substrate, wherein the imaging element is mounted on the substrate,
wherein the frame is attached to the first lens barrel at a position on an object side of the first lens.

2. The imaging device according to claim 1,
wherein the first lens barrel holds a plurality of lenses comprising the first lens, and
wherein, of the plurality of lenses held by the first lens barrel, the first lens is disposed closest to the object side.

3. The imaging device according to claim 1 or 2,
wherein the first lens barrel comprises a flange portion projecting in a direction crossing an optical axis of the imaging optical system, and
wherein the frame is attached to the flange portion.

4. The imaging device according to claim 3,
wherein the flange portion is positioned at an end portion of the first lens barrel at the object side.

5. The imaging device according to any one of claims 1 to 4,
wherein the frame contains at least a portion of the first lens barrel, and a predetermined interval is provided between the frame and the portion of the first lens barrel contained in the frame.

6. The imaging device according to any one of claims 1 to 5, further comprising:
a second lens barrel holding a second lens of the imaging optical system,
wherein the second lens barrel is attached to the first lens barrel with a joining member.

7. The imaging device according to claim 6, wherein the joining member is an adhesive cured with ultraviolet light.

8. The imaging device according to any one of Claims 1 to 7, wherein a coefficient of linear expansion of the frame is less than a coefficient of linear expansion of the first lens barrel.
